# EUROPEAN PATENT SPECIFICATION

(11) **EP 0 877 868 B1**
(45) Date of publication and mention of the grant of the patent: **17.11.1999**
(21) Application number: 97902489.0
(22) Date of filing: 06.02.1997
(51) Int. Cl.: F16D 1/08, F16C 35/06

(54) **LOCKING DEVICE FOR USE WITH SHAFTS OR TUBES**
ARRETIERVORRICHTUNG ZUR VERWENDUNG AUF WELLEN ODER IN RÖHREN
DISPOSITIF DE VERROUILLAGE UTILISABLE AVEC DES ARBRES OU DES TUBES

(30) Priority: 06.02.1996 GB 9602340
(43) Date of publication of application: 18.11.1998
(73) Proprietor: NSK RHP EUROPEAN TECHNOLOGY CO. LIMITED, Ruddington, Nottingham NG11 6JZ (GB)
(72) Inventor: SWINLEY, George, Castleford,West Yorks WF10 3PF (GB)
(74) Representative: Barnard, Eric Edward
(86) International application number: GB9700336
(87) International publication number: WO9729293

(56) References cited:
- DE-A- 3 804 655
- GB-A- 2 282 209
- US-A- 2 739 830
- US-A- 3 598 432
- US-A- 5 269 118

## Description

### TECHNICAL FIELD

The present invention relates to a device which can be selectively locked or clamped to a rotatable component such as a shaft or tube.

### BACKGROUND TO THE INVENTION

Our earlier U.K. Patent Application No. 9419372.9 (2 282 209A) describes locking devices which can be used with a rotatable component such as a shaft or a tube. Although such devices achieve a reliable locking function, a collar means of the device tends to tilt when the device is locked in position and hence wobbles when the shaft or tubes revolves. A general object of the present invention is to provide an improved form of locking device which overcomes this defect.

### DISCLOSURE OF THE INVENTION

According to one aspect of the invention there is provided a device for locking to a component rotatable about an axis; said device comprising collar means having an end wall with a bore defining a surface for confronting an outer surface of the rotatable component and a region extending axially from the end wall, a ring for disposing between the axial region of the collar means and the component , the ring having a first inner surface for confronting the outer surface of the component and a second outer surface which is inclined relative to the axis of rotation to converge with respect to the axis of rotation in a direction away from the end wall and a plurality, i.e., at least two, screw-threaded elements received in screw-threaded bores extending through the axial region of the collar means and spaced apart relative to the rotational axis other than at 180°, the threaded bores being disposed in positions non-radial relative to the rotational axis. The arrangement is such that the screw-threaded elements can be tightened to bear into or against the second outer surface of the ring to cause the bore surface of the collar means and the first surface of the ring to act as contact surfaces with respect to the outer surface of the component and exert clamping force on the component at diametrically opposed zones.

According to another aspect of the invention there is provided a device for locking to a hollow component rotatable about an axis; said device comprising collar means having an end wall with an outer surface for confronting an inner surface of the component and a region extending axially from the end wall; a ring for disposing between the axial region of the collar means and the component, the ring having a first outer surface for confronting the inner surface of the component and a second inner surface which is inclined relative to the axis of rotation to diverge with respect to the axis of rotation in a direction away from the end wall and a plurality, i.e. at least two, screw threaded elements received in screw-threaded bores extending through the axial region of the collar means and spaced apart relative to the rotational axis other than at 180°, the threaded bores being disposed in non-radial positions relative to the rotational axis. The arrangement is such that the screw-threaded elements can be tightened to bear into or against the second inner surface of the ring to cause the outer surface of the ring and the outer surface of the end wall of the collar means to act as contact surfaces with respect to the inner surface of the component and exert clamping force on the component at diametrically opposed zones.

By arranging the screw-threaded elements in bores in non-radial positions on the collar means the tendency for the collar means to wobble as the rotatable component revolves can be prevented.

The threaded bores preferably have axes which intersect at a location which is offset radially from the rotational axis. Preferably, the location is on a radius from the rotational axis and this radius is displaced from a vertical radial plane in an anti-clockwise sense as viewed in the direction of the rotational axis and from the end wall of the collar means.

Preferably there are just two screw-threaded elements with their rotational axes spaced apart around the location where the axes of the associated threaded bores intersect by about 120°. Each screw-threaded element thus has its axis offset from a true radial direction relative to the rotational axis.

The ends of the screw-threaded elements may have plane surfaces normal to their longitudinal axes or surfaces which are set at an angle which generally matches the angle of the second inclined surface of the ring. It is possible to provide shallow depressions, recesses or blind bores in the second surface for receiving the ends of the screw-threaded elements.

The surfaces of the collar means and the ring which confront the component normally lie parallel to the axis of rotation and directly adjacent and alongside one another to form a continuation of one another prior to the tightening of the screw-threaded elements. Between these contact surfaces there may be radial surfaces of the ring and the collar means which engage on one another and slide against one another as the screw elements are tightened or released.

The rotatable component may be a shaft or spindle with the locking device fitted onto its exterior periphery or a hollow shaft or tube with the locking device fitted inside.

It is not essential for the rotatable component to have a circular cross-section and the component can have a polygonal cross-section.

The invention may be understood more readily and various other aspects and features of the invention may become apparent, from consideration of the following description and accompanying drawings.

### BRIEF DESCRIPTION OF DRAWINGS

Embodiments of the invention will now be described by way of examples only, with reference to the accompanying drawing wherein:
Figure 1 is a part sectional side view representation of an assembly employing a locking device constructed in accordance with the invention;
Figure 2 is an end view of the assembly shown in Figure 1 taken in the direction of arrow II of Figure 1;
Figure 3 is a part sectional side view representation of another assembly employing a locking device constructed in accordance with the invention; and
Figure 4 is an end view of the assembly shown in Figure 3 taken in the direction of arrow IV in Figure 3.

### DESCRIPTION OF BEST MODES OF CARRYING OUT THE INVENTION

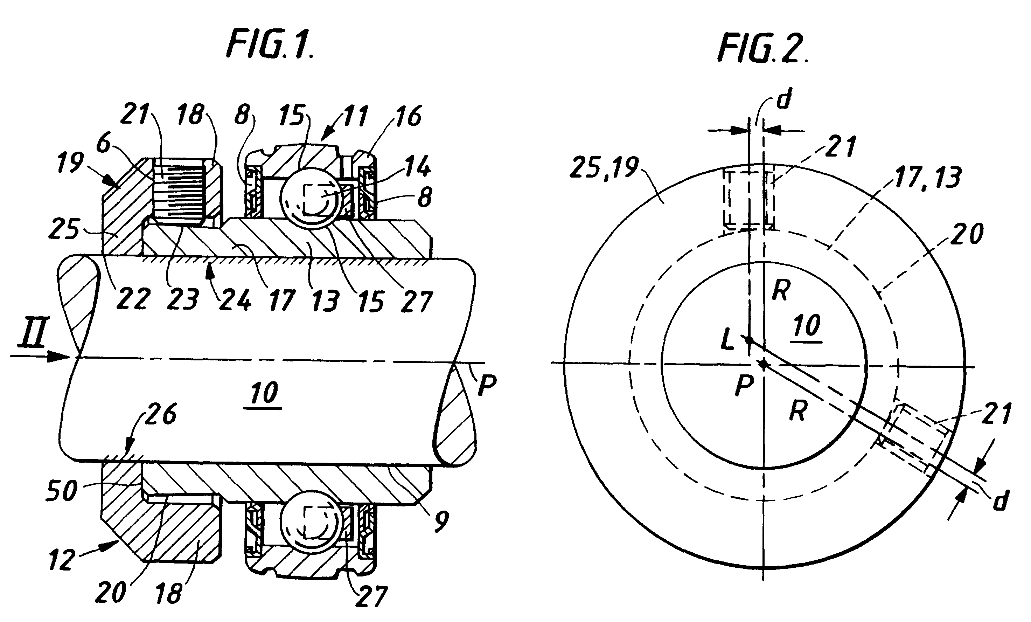

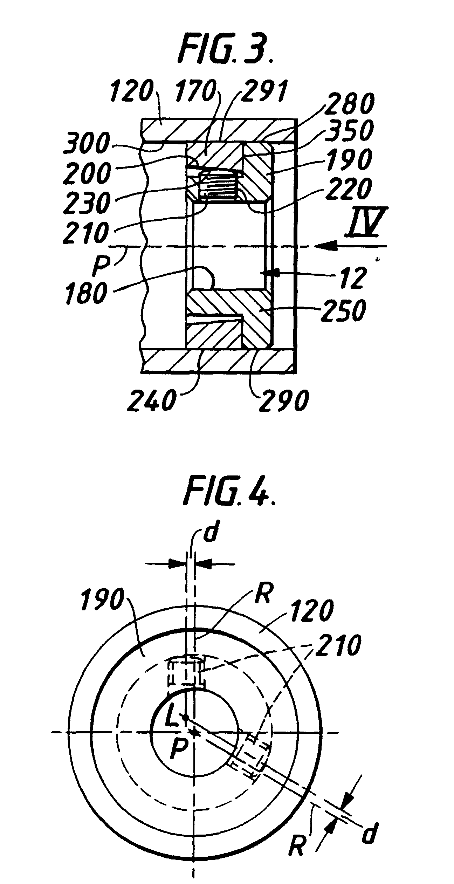

Figures 1 and 3 generally correspond to Figure 1 and 2 of the aforementioned UK patent application 2282209A and use the same reference numerals. As shown in Figures 1 and 2, a shaft 10 carries a rolling-element bearing 11 and a locking device 12. The bearing 11 is composed of an extended inner ring 13 which is to be secured to the shaft 10 with the aid of the device 12 in a non-rotatable manner. The ring 13 has an inner bore surface 9 extending parallel to the outer peripheral surface of the shaft 10. A set of rolling elements, here in the form of balls 14, is disposed in raceways 15 between the inner ring 13 and an outer ring 16. The balls 14 are equi-distantly spaced apart round the raceways 15 with a cage 27 and seals 8 are mounted between the rings 13, 16.

An axial end region 17 of the inner ring 13 is surrounded by an axial region or portion 18 of a collar 19. The collar 19 has an end wall 25 with a bore forming a surface 22 fitted over the shaft 10 with the surface 22 forming a continuation of the inner surface 9 of the ring 13.

The axial region 17 of the bearing inner ring 13 is relieved to provide an outer surface 20 which is tapered to extend at an angle to the axis of the shaft 10. The surface 20 converges towards the shaft axis in the direction of the bearing 11. A typical angle for the surface 20 is 3° and generally an angle in the range 1° to 5° is preferred.

Two screws 21 are located in threaded bores 6 in the axial portion 18 of the collar 19.

As shown in Figure 2, the screws 21 and the bores 6 are offset by the same distance 'd' from radial planes R. The radial planes R are spaced apart by 120° and represent the preferred locations of the screws 21 in accordance with UK patent application No. 2282209A. In contrast to the latter, the longitudinal axes of the screws 21 now intersect at point L spaced from the axis of rotation P and offset therefrom in an anti clockwise sense relative to the vertical radial plane R as viewed in the direction of arrow II, i.e. in the direction of the axis P from the end wall 25 of the collar 19 and the convergence of the surface 20.

The screws 21 can be displaced inwardly of the bores 6 to engage on the outer surface 20 of the ring 13. In a modified arrangement the surface 20 has shallow recesses or depressions or blind bores for locating and receiving the ends 23 of the screws 21. The inner ring 13 of the bearing 11 and the collar 19 can be easily fitted onto the shaft 10 and the screws 21 are then tightened to some predetermined torque. The ends 23 of the screws 21, which can be tapered at the same angle as the surface 20 serve to contact the outer surface 20. When tightened, the ends 23 of the screws 21 press on the outer surface 20 to displace the axial end region 17 of the inner ring 13, and hence the entire inner ring 13, and the axial portion 18 of the collar 19 radially apart. This in turn causes diametrically opposed contact surface zones 24, 26 of the inner bore surface 9 of the ring 13 and of the bore surface 22 in the end wall 25 of the collar 19 to clamp against the shaft 10 radially and uniformly without causing damage to the shaft 10. To release the locking device 12, the screws 21 are untightened to permit the collar 19 and the bearing 11 to be withdrawn from the shaft 10.

The end wall 25 of the collar 19 and the end of the axial region 17 of the ring 13 abut to form sliding guide surfaces 50 as the screws 21 are tightened or released.

As shown in Figures 3 and 4 another locking device 12 is fitted inside a hollow shaft or tube 120. The locking device is again composed of a collar 190 and a separate ring 170. The collar 190 has an axial region 180 with two angularly offset threaded bores 220 receiving screws 210. An end wall 250 of the collar 190 has an outer peripheral surface 280 which is parallel to and confronts an inner surface 300 of the tube 120. The ring 170 has an outer peripheral surface 240 which is parallel to and likewise confronts the inner surface 300 of the tube 120 and an inner surface 200 which is tapered at an angle to the axis of the tube 120. The surface 200 diverges from the end wall 250 relative to the axis of rotation P. As with the first embodiment, the surface 200 can be inclined at an angle of 1° to 5° and preferably 3° to the axis of the tube 120. The surface 200 can contain shallow recesses, depressions or blind bores for receiving the ends 230 of the screws 210.

As shown in Figure 4, the screws 210 and the threaded bores 220 are offset by the same distance 'd' from radial planes R. The radial planes R are spaced apart by 120° and represent the preferred locations of the screws 210 in accordance with UK patent application 2282209A. In contrast to the latter, the longitudinal axes of the screws 210 now intersect at a point L spaced from the axis of rotation P and offset therefrom in an anti clockwise sense relative to the vertical radial plane R as viewed in the direction of arrow IV, i.e. in the direction of the axis P and the divergence of the surface 200 from the end wall 250 of the collar 190.

The device 12 is locked to the tube 120 by tightening the screws 210 to cause their ends 230 to displace the axial region 180 of the collar 190 and the ring 170 radially apart. This in turn causes diametrically opposed surface contact zones 290, 291 of the surface 280 of the collar end wall 250 and of the surface 240 of the ring 170 to bear against the inner surface 300 of the tube 120 to lock the device in place.

The ring 170 and the end wall of the collar 190 have radial faces which abut and establish slidable guide surfaces 350 as the screws 210 are tightened or released. The device can be used to provide an abutment or location for some other component such as a bearing.

In contrast to some known forms of locking device or mechanisms, a device in accordance with the invention does not damage the rotatable component and is easily fitted and removed repeatedly. The device also rotates uniformly with the rotatable component without any wobble.

In the Figure 1 arrangement the inner ring 13 is simply extended and easily machined in one operation. There is no need to provide tapped bores in the ring 13. Also since no excessive tensile stresses are created on the inner ring 13 there is no danger of fracture for this reason. There is also no distortion so the raceways for the balls are unaffected.

## Claims

1. A device (12) for locking to a component (10) rotatable about an axis (P); said device comprising collar means (19) having an end wall (25) with a bore defining a surface (22) for confronting an outer surface of the rotatable component (10) and an axial region (18) extending axially from the end wall, a ring (13) for disposing between the axial region (18) of the collar means and the component (10), the ring (13) having a first inner surface (9) for confronting the outer surface of the component (10) and a second outer surface (20) which is inclined relative to the axis of rotation (P) to converge with respect to the axis of rotation in a direction away from the end wall (25) and at least two screw-threaded elements (21) received in screw-threaded bores (6) extending through the axial region (18) of the collar means (19) and spaced apart relative to the rotational axis (P) other than at 180°, the arrangement being such that the screw-threaded elements (21) can be tightened to bear into or against the second outer surface (20) of the ring (13) to cause the bore surface (22) of the collar means (19) and the first surface (9) of the ring (13) to act as contact surfaces with respect to the outer surface of the component (10) and exert clamping force on the component at diametrically opposed zones (24, 26); **characterized in that** the threaded bores (6) are disposed in positions non-radial relative to the rotational axis.

2. A device (12) for locking to a hollow component (120) rotatable about an axis (P); said device comprising collar means (190) having an end wall (250) with an outer surface (280) for confronting an inner surface (300) of the component (120) and an axial region (180) extending axially from the end wall (250); a ring (170) for disposing between the axial region (180) of the collar means (190) and the component (120), the ring (170) having a first outer surface (240) for confronting the inner surface (300) of the component and a second inner surface (200) which is inclined relative to the axis of rotation to diverge with respect to the axis of rotation in a direction away from the end wall (250) and at least two screw threaded elements (210) received in screw-threaded bores (220) extending through the axial region (180) of the collar means (190) and spaced apart relative to the rotational axis other than at 180° the arrangement being such that the screw-threaded elements (210) can be tightened to bear into or against the second inner surface (200) of the ring (170) to cause the outer surface (240) of the ring and the outer surface (280) of the end wall (250) of the collar means (190) to act as contact surfaces with respect to the inner surface (300) of the component (120) and exert clamping force on the component at diametrically opposed zones; **characterized in that** the threaded bores (220) are disposed in non-radial positions relative to the rotational axis (P).

3. A device according to claim 1 or 2 wherein the threaded bores (6, 220) have axes which intersect at a location (L) which is offset from the rotational axis (P) and disposed on a radius from the rotational axis, said radius being displaced in an anti-clockwise sense relative to a vertical plane as viewed in the direction of the rotational axis from the end wall (25, 250) of the collar means (19, 190).

4. A device according to claim 1, 2 or 3 wherein the confronting surface (22, 280) of the collar means (19, 190) and the first surface (9, 240) of the ring (13, 170) lie closely adjacent to form a continuation of one another.

5. A device according to claim 4 wherein between the confronting surface (22, 280) of the collar means and the first surface (9, 240) of the ring (13, 170) there are radially abutting guide surfaces (50, 350) of the collar means and of the ring which slide against one another as the screw-threaded elements (21, 210) are tightened or released.

6. A device according to any one of claims 1 to 5 wherein the screw-threaded elements (21, 210) have end surfaces for contacting the second surface (20, 200) of the ring (13, 170) which are inclined relative to the axis of rotation.

7. A device according to any one of claims 1 to 6 wherein there are two screw-threaded elements (21, 210).

8. A device according to claim 7 when appended to claim 3 wherein the threaded bores (6, 220) for receiving the screw-threaded elements (21, 210) are spaced apart by 120° relative to the location (L) at which the axes of their associated bores (6, 220) intersect.

9. A device according to any one of claims 1 to 8 wherein the second surface (20, 200) of the ring (13, 170) has depressions, recesses or blind bores for receiving the ends of the screw-threaded elements (21, 210).

10. A device according to any one of claims 3 to 9 when appended to claim 1, wherein the rotatable component is a solid shaft or spindle (10).

11. A device according to claim 10 wherein the ring (13) is itself another component of, or part of, some other structure (11) which is to be locked with the device.

12. A device according to claim 11 wherein the ring is formed by an extended region of the inner ring of a rolling element bearing (11).

13. A device according to claim 2 or any one of claims 3 to 9 when appended to claim 2, wherein the component is a hollow shaft or tube (120).

14. A device according to any one of the preceding claims, wherein the second surface (20, 200) of the ring is inclined at an angle of 1° to 5° to the axis of rotation (P).

15. An assembly composed of a device according to any one of the preceding claims in combination with the rotatable component (10, 120).

## Patentansprüche

1. Vorrichtung (12) zur Verriegelung an einem um eine Achse (P) rotierbaren Bauteil (10), mit einem Kragenmittel (19), das eine Endwand (25) mit einer Bohrung, die eine Fläche (22) zum Anliegen an eine Außenfläche des rotierbaren Bauteils (10) definiert, und einen axial von der Endwand abragenden axialen Abschnitt (18) aufweist, mit einem Ring (13) zur Anordnung zwischen dem axialen Abschnitt (18) des Kragenmittels und dem Bauteil (10), wobei der Ring (13) eine erste Innenfläche (9) zum Anliegen an die Außenfläche des Bauteils (10) und eine zweite Außenfläche (20) aufweist, die bezüglich der Rotationsachse (P) geneigt ist, um in einer Richtung weg von der Endwand (25) bezüglich der Rotationsachse zu konvergieren, und mit mindestens zwei mit Schraubengewinden versehenen Elementen (21), die in Schraubengewindebohrungen (6) aufgenommen sind, die sich durch den axialen Bereich (18) des Kragenmittels (19) erstrecken und bezüglich der Rotationsachse (P) um einen von 180° verschiedenen Winkel beabstandet sind, wobei die Anordnung derart ist, daß die mit Schraubengewinden versehenen Elemente (21) angezogen werden können, um in oder gegen die zweite Außenfläche (20) des Rings (13) zu ragen, um zu bewirken, daß die Bohrungsoberfläche (22) des Kragenmittels (19) und die erste Fläche (9) des Rings (13) als Kontaktflächen bezüglich der Außenfläche des Bauteils (10) wirken und eine Klemmkraft auf das Bauteil an diametral gegenüberliegenden Abschnitten (24, 26) ausüben,
**dadurch gekennzeichnet,**
daß die Gewindebohrungen (6) in bezüglich der Rotationsachse nicht-radialen Positionen angeordnet sind.

2. Vorrichtung (12) zur Verriegelung an einem um eine Achse (P) rotierbaren hohlen Bauteil (120), mit einem Kragenmittel (190), das eine Endwand (250) mit einer Außenfläche (280) zum Anliegen an einer Innenfläche (300) des Bauteils (120), und einen axial von der Endwand (250) abragenden axialen Abschnitt (180) aufweist, mit einem Ring (170) zur Anordnung zwischen dem axialen Abschnitt (180) des Kragenmittels (190) und dem Bauteil (120), wobei der Ring (170) eine erste Außenfläche (240) zum Anliegen an der Innenfläche (300) des Bauteils und eine zweite Innenfläche (200) aufweist, die bezüglich der Rotationsachse geneigt ist, um in einer Richtung weg von der Endwand (250) bezüglich der Rotationsachse zu divergieren, und mit mindestens zwei mit Schraubengewinden versehenen Elementen (210), die in Schraubengewindebohrungen (220) aufgenommen sind, die sich durch den axialen Bereich (180) des Kragenmittels (190) erstrecken und bezüglich der Rotationsachse um einen von 180° verschiedenen Winkel beabstandet sind, wobei die Anordnung derart ist, daß die mit Schraubengewinden versehenen Elemente (210) angezogen werden können, um in oder gegen die zweite Innenfläche (200) des Rings (170) zu ragen, um zu bewirken, daß die Außenfläche (240) des Rings und die Außenfläche (280) der Endwand (250) des Kragenmittels (190) als Kontaktflächen bezüglich der Innenfläche (300) des Bauteils (120) wirken und eine Klemmkraft auf das Bauteil an diametral gegenüberliegenden Abschnitten ausüben, dadurch gekennzeichnet daß die Gewindebohrungen (220) in nicht-radialen Positionen bezüglich der Rotationsachse (P) angeordnet sind.

3. Vorrichtung nach Anspruch 1 oder 2, bei der die Gewindebohrungen (6, 220) Achsen aufweisen, die sich an einem Ort (L) schneiden, der von der Rotationsachse (P) verschoben ist und auf einem Radius der Rotationsachse liegt, der bezüglich einer vertikalen Ebene in Blickrichtung der Rotationsachse von der Endwand (25, 250) des Kragenmittels (19, 190) entgegen der Uhrzeigerdrehung versetzt ist.

4. Vorrichtung nach Anspruch 1, 2 oder 3, bei der die anliegende Fläche (22, 280) des Kragenmittels (19, 190) und die erste Fläche (9, 240) des Rings (13, 170) eng benachbart zueinander liegen, um eine gegenseitige Fortführung zu bilden.

5. Vorrichtung nach Anspruch 4, bei der zwischen der anliegenden Fläche (22, 280) des Kragenmittels und der ersten Fläche (9, 240) des Rings (13, 170) radial aneinanderstoßende Führungsflächen (50, 350) des Kragenmittels und des Rings befinden, die beim Festziehen oder Lösen der mit Schraubengewinden versehenen Elemente (21, 210) gegeneinander gleiten.

6. Vorrichtung nach einem der Ansprüche 1 bis 5, bei der die mit Schraubengewinden versehenen Elemente (21, 210) Endflächen zum Kontaktieren der zweiten Fläche (20, 200) des Rings (13, 170) aufweisen, die bezüglich der Rotationsachse geneigt sind.

7. Vorrichtung nach einem der Ansprüche 1 bis 6, bei der zwei mit Schraubengewinden versehene Elemente (21, 210) vorgesehen sind.

8. Vorrichtung nach Anspruch 7, sofern auf Anspruch 3 zurückbezogen, bei der die Gewindebohrungen (6, 220) zur Aufnahme der mit Schraubengewinden versehenen Elemente (21, 210) um 120° bezüglich des Ortes (L), in dem sich die Achsen der zugeordneten Bohrungen (6, 220) schneiden, beabstandet sind.

9. Vorrichtung nach einem der Ansprüche 1 bis 8, bei der die zweite Fläche (20, 200) des Rings (13, 170) Vertiefungen, Ausnehmungen oder Grundbohrungen zur Aufnahme der Enden der mit Schraubengewinden versehenen Elemente (21, 210) aufweist.

10. Vorrichtung nach einem der Ansprüche 3 bis 9, sofern auf Anspruch 1 zurückbezogen, bei dem das rotierbare Bauteil eine feste Welle oder Spindel (10) ist.

11. Vorrichtung nach Anspruch 10, bei der der Ring (13) selbst ein anderes Bauteil oder Teil einer anderen Struktur (11) ist, die mit der Vorrichtung zu Verriegeln ist.

12. Vorrichtung nach Anspruch 11, bei der der Ring aus einem erweiterten Abschnitt des inneren Rings eines Rollenelementlagers (11) gebildet ist.

13. Vorrichtung nach Anspruch 2 oder einem der Ansprüche 3 bis 9, sofern auf Anspruch 2 zurückbezogen, bei der das Bauteil eine Hohlwelle oder ein Rohr (120) ist.

14. Vorrichtung nach einem der vorstehenden Ansprüche, bei der der zweite Fläche (20, 200) des Rings unter einem Winkel von 1° bis 5° zu der Rotationsachse (P) geneigt ist.

15. Anordnung bestehend aus einer Vorrichtung nach einem der vorstehenden Ansprüche in Verbindung mit dem rotierbaren Bauteil (10, 120).

## Revendications

1. Dispositif (12) destiné à être bloqué sur un composant (10) pouvant être entraîné en rotation autour d'un axe (P) ; ledit dispositif comprenant un moyen de collier (19) comportant une paroi latérale (25) présentant un alésage définissant une surface (22) destinée à venir en regard d'une surface externe du composant pouvant être entraîné en rotation (10) et une région axiale (18) s'étendant axialement à partir de la paroi d'extrémité, une bague (13) destinée à être disposée entre la région axiale (18) du moyen de collier et le composant (10), la bague (13) présentant une première surface interne (9) destinée à venir en regard de la surface externe du composant (10) ainsi qu'une seconde surface externe (20) qui est inclinée relativement à l'axe de rotation (P) afin de converger par rapport à l'axe de rotation suivant une direction s'écartant de la paroi d'extrémité (25) et au moins deux éléments filetés (21) reçus dans des trous taraudés (6) s'étendant à travers la région axiale (18) du moyen de collier (19) et espacés l'un de l'autre relativement à l'axe de rotation (P) suivant un angle autre que de 180°, l'agencement étant tel que les éléments filetés (21) peuvent être serrés afin de porter dans ou contre la seconde surface externe (20) de la bague (13) afin d'amener la surface d'alésage (22) du moyen de collier (19) et la première surface (9) de la bague (13) à agir comme surfaces de contact par rapport à la surface externe du composant (10) et à exercer une force de serrage sur le composant au niveau de zones diamétralement opposées (24, 26) ; caractérisé en ce que les alésages taraudés (6) sont disposés à des positions non radiales relativement à l'axe de rotation.

2. Dispositif (12) destiné à être bloqué dans un composant creux (120) pouvant être entraîné en rotation autour d'un axe (P) ; ledit dispositif comprenant un moyen de collier (190) comportant une paroi d'extrémité (250) présentant une surface externe (280) destinée à venir en regard d'une surface interne (300) du composant (120) et une région axiale (180) s'étendant axialement à partir de la paroi d'extrémité (250) ; une bague (170) destinée à être disposée entre la région axiale (180) du moyen de collier (190) et le composant (120), la bague (170) présentant une première surface externe (240) destinée à venir en regard de la surface interne (300) du composant ainsi qu'une seconde surface interne (200) qui est inclinée relativement à l'axe de rotation afin de diverger par rapport à l'axe de rotation suivant une direction s'écartant de la paroi d'extrémité (250) et au moins deux éléments filetés (210) reçus dans des trous taraudés (220) s'étendant à travers la région axiale (180) du moyen de collier (190) et espacés l'un de l'autre relativement à l'axe de rotation suivant un angle autre que de 180°, l'agencement étant tel que les éléments filetés (210) peuvent être serrés afin de porter dans ou contre la seconde surface interne (200) de la bague (170) afin d'amener la surface externe (240) de la bague et la surface externe (280) de la paroi d'extrémité (250) du moyen de collier (190) à agir comme surfaces de contact par rapport à la surface interne (300) du composant (120) et à exercer une force de serrage sur le composant au niveau de zones diamétralement opposées ; caractérisé en ce que les trous taraudés (220) sont disposés dans des positions non radiales relativement à l'axe de rotation (P).

3. Dispositif selon la revendication 1 ou 2 dans lequel les trous taraudés (6, 220) présentent des axes qui se recoupent en un emplacement (L) qui est déporté par rapport à l'axe de rotation (P) et est disposé sur un rayon par rapport à l'axe de rotation, ledit rayon étant déplacé dans le sens inverse des aiguilles d'une montre relativement à un plan vertical, observé suivant la direction de l'axe de rotation depuis la paroi d'extrémité (25, 250) du moyen de collier (19, 190).

4. Dispositif selon la revendication 1, 2 ou 3 dans lequel la surface venant en regard (22, 280) du moyen de collier (19, 190) et la première surface (9, 240) de la bague (13, 170) s'étendent à proximité immédiate de façon à former un prolongement l'une de l'autre.

5. Dispositif selon la revendication 4 dans lequel, entre la surface venant en regard (22, 280) du moyen de collier et la première surface (9, 240) de la bague (13, 170) se trouvent des surfaces de guidage venant radialement en butée (50, 350) du moyen de collier et de la bague, qui coulissent l'une contre l'autre lorsque les éléments filetés (21, 210) sont serrés ou desserrés.

6. Dispositif selon l'une quelconque des revendications 1 à 5 dans lequel les éléments filetés (21, 210) comportent des surfaces d'extrémité destinées à venir en contact avec la seconde surface (20, 200) de la bague (13, 170), qui sont inclinées relativement à l'axe de rotation.

7. Dispositif selon l'une quelconque des revendications 1 à 6 dans lequel il existe deux éléments filetés (21, 210).

8. Dispositif selon la revendication 7 lorsqu'elle dépend de la revendication 3, dans lequel les alésages taraudés (6, 220) destinés à recevoir les éléments filetés (21, 210) sont espacés l'un de l'autre de 120° relativement à l'emplacement (L) auquel les axes de leurs alésages associés (6, 220) se recoupent.

9. Dispositif selon l'une quelconque des revendications 1 à 8 dans lequel la seconde surface (20, 200) de la bague (13, 170) comporte des creux, des évidements ou des trous borgnes destinés à recevoir les extrémités des éléments filetés (21, 210).

10. Dispositif selon l'une quelconque des revendications 3 à 9 lorsqu'elle dépend de la revendication 1, dans lequel le composant pouvant être entraîné en rotation est un arbre ou un axe massif (10).

11. Dispositif selon la revendication 10 dans lequel la bague (13) est elle-même un autre composant d'une certaine autre structure (11), ou une partie de celle-ci, qui doit être bloquée à l'aide du dispositif.

12. Dispositif selon la revendication 11 dans lequel la bague est formée par une région prolongée de la bague interne d'un palier à éléments roulants (11).

13. Dispositif selon la revendication 2 ou l'une quelconque des revendications 3 à 9 lorsqu'elle dépend de la revendication 2, dans lequel le composant est un arbre creux ou un tube (120).

14. Dispositif selon l'une quelconque des revendications précédentes, dans lequel la seconde surface (20, 200) de la bague est inclinée suivant un angle de 1° à 5° par rapport à l'axe de rotation (P).

15. Assemblage composé d'un dispositif selon l'une quelconque des revendications précédentes en combinaison avec le composant pouvant être entraîné en rotation (10, 120).
